Europäisches Patentamt

European Patent Office

Office européen des brevets

(11) Veröffentlichungsnummer: **0 249 590**
**A1**

## EUROPÄISCHE PATENTANMELDUNG

(21) Anmeldenummer: 87890121.4

(22) Anmeldetag: 26.05.87

(51) Int. Cl.⁴: **F 16 L 57/00**
E 04 B 1/72, B 29 C 67/16

(30) Priorität: 26.05.86 AT 1399/86

(43) Veröffentlichungstag der Anmeldung:
16.12.87 Patentblatt 87/51

(84) Benannte Vertragsstaaten:
AT BE CH DE ES FR GB GR IT LI LU NL SE

(71) Anmelder: **Bilas, Andor**
**Kirchengasse 8**
**A-1070 Wien VII (AT)**

(72) Erfinder: **Bilas, Andor**
**Kirchengasse 8**
**A-1070 Wien VII (AT)**

(74) Vertreter: **Krause, Ernst, Dipl.-Ing. et al**
**Dipl.- Ing. Krause, Ernst Dipl. Ing. Casati, Wilhelm**
**Patentanwälte Amerlingstrasse 8**
**A-1061 Wien (AT)**

(54) **Nagerbissgeschütztes Bauelement, Verfahren zu seiner Herstellung und Verbindungsring oder Verbindungsmuffe zur Verwendung mit einem insbesondere nagersicheren Bauelement.**

(57) Die Erfindung betrifft ein Bauelement aus Kunststoff, dessen Wandung Hartmaterial enthält, um Sicherheit gegen Rattenfraß zu schaffen. Das Hartmaterial besitzt dabei eine Härte von mindestens 9 auf der Mohs'schen Härteskala. Weiters ist Gegenstand der Erfindung ein Verbindungsring oder eine -muffe für ein Bauelement, z.B. ein Rohr, wobei der Ring (6) oder die Muffe (5) eine Innennut (6') aufweisen, die nach der Montage des Ringes bzw. der Muffe (5) mit Kunststoff ausgegossen werden, wodurch das Bauelement und die Muffe (5) oder der Ring gegen eine Relativbewegung in axialer Richtung gesichert werden.

FIG.1

EP 0 249 590 A1

## Beschreibung

Nagerbißgeschütztes Bauelement, Verfahren zu seiner Herstellung und Verbindungsring oder Verbindungsmuffe zur Verwendung mit einem insbesondere nagersicheren Bauelement

Die Erfindung betrifft ein nagerbißgeschütztes Bauelement bzw. -teil insbes. Rohr, ausgestattet mit mineralischen Stoffen mit einer Härte nach Mohs von mindestens 9.

Bekannt wurden bereits sogenannte Kunstbetonrohre (CH-PS 587391 und AT-PS 357480), die aus Kunstharz und Zuschlagstoff zusammengesetzt sind. Die Rohrwandung ist dabei aus einem Gemisch gebildet, das 85 - 92,5 Gew.-% mineralische Zuschlagstoffe (Quarz) und 7,5 bis l5 Gew.-% Kunstharzbindemittel (hochviskoses, ungesättigtes Polyesterharz oder hochviskoses Epoxiharz) enthält. Mindestens ein Teil der Zuschlagstoffe soll dabei ein Korngrößenspektrum mit Korngrößen in der Größenordnung von O,1 bis 1 mm aufweisen. Solche Rohre sollen gegenüber herkömmlichen Rohren, vor allem solchen aus Steinzeug, große Festigkeit, ausreichende Scheiteldrucklast bei geringem Gewicht, ausreichende Elastizität sowie Maßgenauigkeit aufweisen. Nachteilig ist jedoch bei solchen Rohren die mangelnde Widerstandsfähigkeit gegen Rattenfraß und das Anfressen auch durch andere Nager. Aus diesem Grund wird die Zulassung der bekannten Rohre häufig auf nichthorizontale Verlegestrecken beschränkt.

Um Metallrohre gegen die abrasive Wirkung von in diesen Rohren geförderten abrasiven oder korrosiven Materialien zu schützen, werden an der Innenseite der Metallrohre ziegelartige Einsätze, welche eine Härte nach Mohs von etwa 9 aufweisen, eingelegt. Solche Rohre werden, da sie aus Metall bestehen, von Nagern nicht durchgebissen, so daß sich das Problem des Nagerschutzes dort nicht stellt.

Weiters wurde es bekannt, Metallrohre, z.B. Eisenrohre, zum Schutz gegen agressive Medien mit einer elastischen Spachtelmasse auf Basis von Kunststofflösungen auszukleiden. Diese Spachtelmasse kann dabei inerte Füllstoffe, wie Quarzpulver, Glaspulver, Korundmehl und anderes enthalten.

Der Erfindung liegt nun die Aufgabe zugrunde, ein Bau element der eingangs erwähnten Art so weiterzubilden, daß nicht nur die bei bereits bekannten Kunststoffrohren erreichbaren günstigen Eigenschaften erzielt werden, sondern darüberhinaus ein universell verwendbarer, nagersicherer Bauteil aus Kunststoff geschaffen wird. Erreicht wird dies bei einem Bauelement der eingangs erwähnten Art, wenn gemäß der Erfindung zum Schutz von Bauelementen bzw. -teilen aus Kunststoff, insbes. Kunststoffrohren, gegen Nagerbiß, die mineralischen Stoffe der Mohshärte von mindestens 9 als Zuschlagstoffe in der Wandung, insbes. als Zwischenschicht in dem Kunststoffbauelement bzw. -teil, insbesonders -rohr enthalten sind und/oder als äußere oder innere Oberflächenschicht auf dem Kunststoffbauelement bzw. -teil, insbesonders -rohr aufgebracht sind, wobei an ausgewählten Stellen des Wandungsquerschnittes eine erhöhte Konzentration an Hartstoffen vorgesehen sein kann. Im Hinblick auf die hohe Härte der Zusatz- bzw. Zuschlagstoffe, die die Härte des Zahnschmelzes der bekannten Nager übersteigt, kann die Gefahr, daß sich Nager, insbes. Ratten, durch die Kunststoffbauelemente hindurchfressen, hintangehalten werden. Die Kunststoffrohre können dabei auch horizontal verlegt werden, was vor allem für Kanalisationsleitungen von entscheidender Bedeutung ist und die Verwendung von Steingutrohren überflüssig macht. Im Fall erfindungsgemäß ausgebildeter Rohre können diese sowohl hinsichtlich ihres Durchmessers als auch hinsichtlich ihrer Länge in beliebigen Dimensionen hergestellt werden. Längen von 5 m und darüber sind herstellbar. Die Längendimension von Steingutrohren hingegen ist auf ca. l,25 m beschränkt, wodurch in langen Strängen eine Vielzahl von Verbindungsstellen vorhanden ist, deren jede herstellungs- und wartungsmäßig kostspielig ist und die Gefahr von Undichtheiten des Stranges erhöht. Auch sind bei Steingutrohren die Durchmesser dimensionsmäßig auf wenige Größen beschränkt. Dadurch stößt die Reparatur von Rohrsträngen, die aus alten Steingutrohren bestehen, deren Durchmesser heutzutage nicht mehr produziert wird (z.B. l75 mm) auf fast unüberwindliche Schwierigkeiten, vor allem wenn we gen eines horizontalen Strangverlaufes, herkömmliche Kunststoffrohre wegen mangelnder "Nagersicherheit" zur Reparatur des Stranges nicht herangezogen werden konnten.

Erfindungsgemäße Bauelemente können auch als Formstücke für Rohrleitungsstränge vorgesehen und als Abzweigungen, Übergangsstücke und Putzstücke ausgebildet werden. Mit bisnun eingesetzten Putzstücken aus Steingut konnte ein Austritt von Ratten oder Nagern nur dann verhindert werden, wenn die Putzöffnung sicher mit einem Dekkel verschlossen ist. Nun brechen erfahrungsgemäß die Halteösen für die Deckel nach mehrmaligem Öffnen und Wiederverschließen aus. Der Deckel wurde in solchen Fällen dann nur mehr mit einem Stein beschwert, wodurch jedoch ein Freilegen der Öffnung nicht vermieden werden konnte. Durch die Elastizität der erfindungsgemäß gestalteten Bauelemente ist ein Ausbrechen der Ösen nicht mehr zu erwarten, womit die Deckel sicher am Putzstück gehalten werden können und das Putzstück als solches - bedingt durch die erfindungsgemäße Ausbildung - auch gegen Anfressen durch Nager sicher ist.

Erfindungsgemäß gestaltete Bauelemente können auch als Mantelrohre Verwendung finden, in welchen dann technische Versorgungsleitungen (etwa Telephonleitungen, elektrische Kabel u.dgl.) oder auch andere Stränge Aufnahme finden können, ohne daß diese Versorgungsleitungen oder Stränge dann selbst gegen "Nagerfraß" gesichert sein müßten.

Unter Verwendung erfindungsgemäß ausgestalteter Bauelemente können auch Krümmungen problemlos hergestellt werden, im Hinblick auf die "Nagersicherheit" auch in horizontaler Ebene.

Sind die Bauelemente als Kabel ausgeführt, die ungeschützt in der Erde verlegt werden sollen, so ist es besonders zweckmäßig, wenn der die Zusatz- bzw. Zuschlagstoffe enthaltende Kunststoff eine Ummantelung des Kabels bildet. Auf diese Weise können auch bereits vorhandene Kabel noch "nagersicher" gemacht werden.

In einer weiteren Ausführungsform des erfindungsgemäßen Bauelementes können die Zusatz- bzw. Zuschlagstoffe als Sperrschicht zwischen dem Innenraum und dem Außenraum des Bauelementes angeordnet werden. Diese Ausführung bietet sich an, wenn das Bauelement in Schichten hergestellt wird. Die Schichten können dabei, im Querschnitt des Bauteiles bzw. Bauelementes betrachtet, als voneinander beabstandete Schichten vorgesehen sein. Die Konzentration der Zuschlagstoffe kann aber erfindungsgemäß auch, über den Querschnitt betrachtet, einen beliebigen Verlauf haben, z.B. ausgehend von den Rändern des Querschnittes zur Querschnittsmitte zunehmend oder umgekehrt, von der Mitte ausgehend zu beiden Rändern zunehmend oder an einem Rand erhöht sein und zum andern Rand, insbes. gleichförmig abfallend ausgebildet sein.

Es ist auch möglich, das Bauelement aus einem homogenen Gemisch herzustellen, das den Kunststoff und den Zuschlagstoff enthält.

Bei der Herstellung des Bauelementes in einem erfindungsgemäßen Extrudierverfahren kann der Zuschlagstoff vor dem Düsenaustritt dem Kunststoff zugeführt werden. Dadurch kann man beispielsweise im Bereich der Außenhaut des extrudierten Elementes eine höhere Konzentration an Hartmaterial erhalten. Stehen mehrere Kanäle für die Zufuhr von Kunststoff und auch für die Zufuhr des Hartstoffes zur Düse zur Verfügung, ist es möglich, praktisch an den jeweils gewünschten Stellen der Wandstärke eine erhöhte Konzentration an Hartstoffen zu erzielen, so daß etwa eine Kunststoffschicht mit einer Schicht aus Hartmaterial abwechselt oder zwischen zwei Hartmaterialschichten eine Kunststoffschicht gewählter Stärke vorhanden ist.

Ein bevorzugtes Verfahren zur Herstellung eines durch die erfindungsgemäße Ausgestaltung "nagersicheren" Bauelementes, zeichnet sich dadurch aus, daß auf einen Wickelkern, der bevorzugt als ein aus Polyvinylchlorid bestehendes Rohr ausgebildet ist, Kunststoff, insbesondere Epoxiharz, aufgetragen, gegebenenfalls mit Fasern, vorzugsweise Glas- oder Kohlenstoffasern, verstärkt und mit dem Zusatz bzw. Zuschlagstoff mit einer Härte von mindestens 9 nach Mohs bedeckt wird, worauf weitere Schichten aus Kunststoff, in die vorzugsweise Verstärkungsfasern eingebettet werden, aufgetragen werden.

Bei einem weiteren erfindungsgemäßen Verfahren kann der Zuschlagstoff auch im Schleuderverfahren auf den Bauteil, vor allem außen aufgebracht werden.

Die Erfindung charakterisiert sich auch als Verwendung von mineralischen Zuschlagstoffen mit einer Härte nach Mohs von mindestens 9 an Bauelementen, insbes. an Rohren, wobei erfinderisch ist, daß als Schutz für Kunststoffbauelemente, insbes. -rohre gegen Nagerbiß die Zuschlagstoffe in der Wandung, insbes. als Zwischenschicht in dem Kunststoffbauelement, insbes. -rohr enthalten sind und/oder als Oberflächenschicht auf dem Kunststoffbauelement, insbes. -rohr außen oder innen aufgebracht sind.

Weiterer Gegenstand der Erfindung ist auch ein Verbindungsring oder -muffe, insbes. zur Verwendung mit einem erfindungsgemäß gebildeten nagersicheren Bauelement, z.B. Rohr.

Aufgabe ist es dabei, den Ring bzw. die Muffe so auszubilden, daß auf einfache Weise eine haltbare Verbindung mit dem Bauelement, das z.B. als Rohr ausgebildet sein kann, erzielt werden kann. Erfindungsgemäß wird daher vorgeschlagen, daß der Ring oder die Muffe in jenem Bereich, der zur Verbindung mit dem Bauelement vorgesehen ist, eine in sich geschlossene Innennut aufweist, in welche mindestens ein nach außen führender Eingußkanal für flüssigen Kunststoff mündet. Wird in den Eingußkanal flüssiger Kunststoff eingegossen, so wird der Spalt zwischen dem Verbindungsring bzw. der Verbindungsmuffe mit Kunststoff gefüllt, der auch den Kunststoff des Bauelementes anlöst, so daß eine feste und auch dichte Verbindung zwischen dem Ring bzw. der Muffe und dem Rohr entsteht. Von besonderer Bedeutung ist der Erfindungsgegenstand, wenn ein Rohr mit einem Altrohr aus Steingut verbunden werden soll. Dabei wird eine Verbindungsmuffe verwendet, die wie vorstehend erläutert, mit dem Ergänzungsrohr verbunden ist, wobei zwischen dem Altrohr und der Muffenerweiterung Dichtungsmate rial (z.B. Schnurdichtungen) eingebracht werden.

Eine besonders feste Verbindung zwischen einem Bauelement und dem Verbindungsring oder der Verbindungsmuffe wird erzielt, wenn in besonderer Ausgestaltung der Erfindung seitlich der Innennut, bevorzugt zu beiden Seiten der Innennut, Ringnuten von gegenüber der Innennut kleinerem, bevorzugt trapezförmigem Querschnitt, angeordnet sind. Bei dieser Ausführungsform bilden die Ringnuten Verankerungselemente für das Ausgußmaterial, nach dessen Aushärtung. Die Ringnuten wirken während des Ausgießvorganges als Labyrinthdichtung. Dieser Dichteffekt kann gesteigert werden, wenn jede von der Innennut weiter entfernte Ringnut jeweils einen kleineren Querschnitt als die ihr benachbarte, jedoch der Innennut näher gelegene Ringnut aufweist.

Die Muffe bzw. der Ring können in einfacher Weise an einem Bauelement gemäß der Erfindung festgelegt werden, wenn erfindungsgemäß die Innennut mit flüssigem Kunststoff ausgegossen und eine Kunststoffbrücke zwischen dem Ring bzw. der Muffe und dem Bauelement gebildet wird, wobei bei aus Kunststoff bestehenden Bauelementen der Ausgußkunststoff den Kunststoff des Bauelementes anlöst.

Die Erfindung wird nachstehend anhand der Zeichnung beispielsweise näher erläutert. Es zeigen,

Fig. I in einem achsialen Längsschnitt ein erfindungsgemäß als nagersicheres Rohr gestaltetes Bauelement, mit einer erfindungsgemäß ausgebildeten Verbindungsmuffe, im Einsatz als Ersatzelement in einem aus Altrohren (Tonrohren) bestehenden Strang,

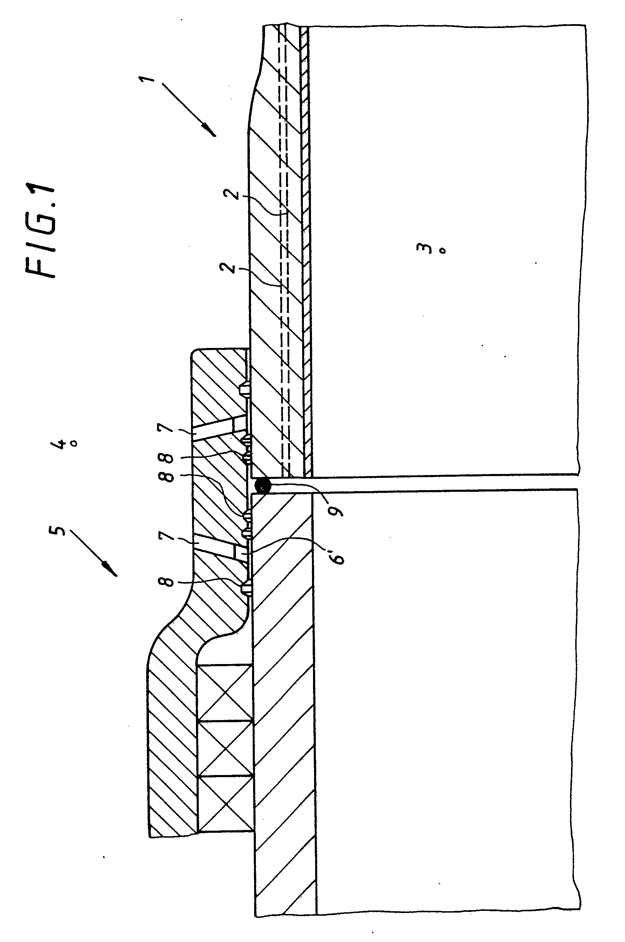

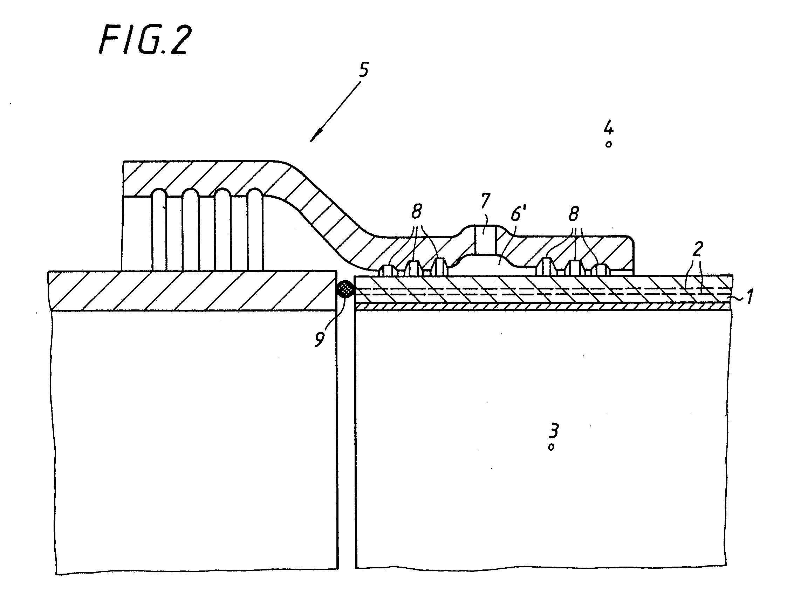

Fig. 2 in analoger Darstellung wie in Fig. I, die gleiche Anwendung, jedoch mit einer Verbindungsmuffe von gegenüber Fig. I geänderter Ausführung, und

Fig. 3 ebenfalls in einem axialen Längsschnitt zwei als nagersichere Rohre gestaltete Bauelemente mit einem erfindungsgemäß ausgebildeten Verbindungsring.

Gemäß den drei Zeichnungsfiguren ist das nagersichere erfindungsgemäße Bauelement jeweils als Rohr ausgebildet. Die Wandung I des Rohres besitzt in Kunststoff einge bettete Zusatz- bzw. Zuschlagstoffe 2, deren Härte zumindest 9 nach der Mohs'schen Härteskala beträgt. Als Material, das diese Härte besitzt, kommt vor allem Korund in Frage. Die Zusatz- bzw. Zuschlagstoffe 2 können als Sperrschicht zwischen dem Innenraum 3 und dem Außenraum 4 des Bauelementes in dessen Wand I angeordnet sein. Es ist jedoch auch möglich, die Zusatz- bzw. Zuschlagstoffe 2 homogen, also in Form eines Gemisches, im Kunststoff unterzubringen. Als Kunststoff wird dabei bevorzugt Epoxidharz verwendet. In einer anderen Ausführungsform des erfindungsgemäßen Bauelementes kann dieses auch als Kabel, wie es etwa für Telefonzwecke verwendet wird, ausgebildet sein. In einem solchen Fall kann dann der die Zusatz- bzw. Zuschlagstoffe enthaltende Kunststoff eine Ummantelung des Kabels bilden. Durch das Vorsehen der harten Zusatz- bzw. Zuschlagstoffe 2 wird ein Bauelement erreicht, das gegen eine Zerstörung durch Nagetiere, insbesondere durch Ratten, gesichert ist. Die Wandung I der erfindungsgemäßen nagersicheren Bauelemente wird bevorzugt aus einem durch Fasern verstärkten Laminat, insbesondere einem glasfaserverstärkten Laminat hergestellt. Aufgrund ihrer Rattensi cherheit können solche Bauelemente, insbesondere Rohre, auch in horizontal verlaufende Rohrstränge eingesetzt werden bzw. können aus solchen nagersicheren Rohren horizontale Stränge hergestellt werden, was unter Anwendung der bis jetzt bekannt gewordenen Kunststoffrohre nicht zulässig war. Insbesondere ist es unter Anwendung wie vorstehend beschrieben "nagersicher" produzierter erfindungsgemäßer Rohre möglich, Stränge, die etwa aus Tonrohren, insbesondere solchen der alten Dimension von I75 mm Durchmesser bestanden, zu reparieren, dadurch, daß ein schadhaft gewordener Abschnitt aus dem Altrohr herausgeschnitten wird und für diesen Teil ein rattensicher gestaltetes Bauelement in Form eines Rohres eingesetzt wird. Hiezu ist es von besonderem Vorteil, Verbindungsstücke in Form von erfindungsgemäß ausgebildeten Muffen vorzusehen. Die Muffe des Verbindungsstückes wird hie bei so angeordnet, daß sie über dem Ende des Altrohres zu liegen kommt und der Raum zwischen dem Altrohr und der Muffe dann durch eine Dichtung, z.B. eine Schnurdichtung ausgefüllt wird.

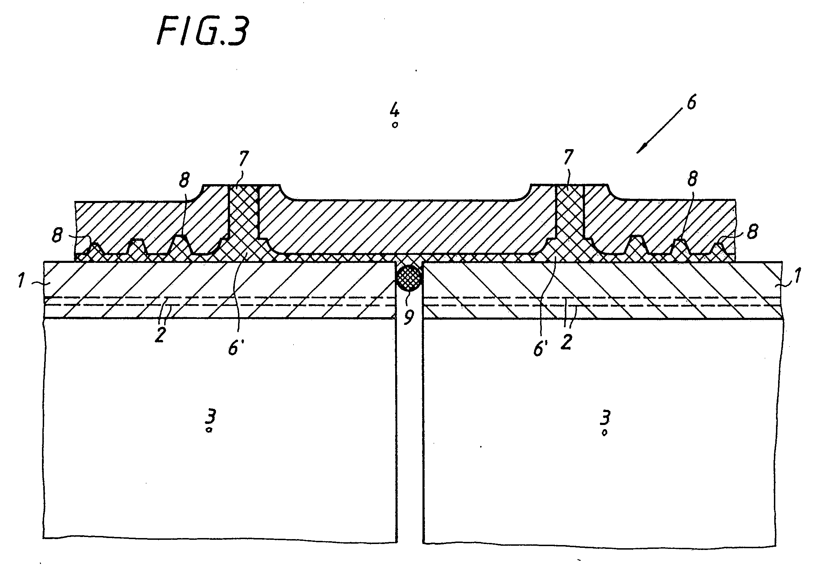

Um zwei erfindungsgemäß nagersicher ausgebildete Rohre zu verbinden, wie dies etwa bei Herstellung längerer Stränge erforderlich wird, verwendet man zweckmäßig einen erfindungsgemäß gestalteten Verbindungsring 6, wie ein solcher in Fig. 3 dargestellt ist.

Der Ring 6 oder die Muffe 5 weisen in jenem Bereich, der zur Verbindung mit dem Bauelement vorgesehen ist, eine in sich geschlossene Innennut 6' auf. In diese Innennut mündet mindestens ein nach außen führender Eingußkanal 7. Durch diesen Eingußkanal wird, sobald die Muffe auf den Endbereich des erfindungsgemäß gestalteten Rohres aufgeschoben ist, flüssiger Kunststoff eingebracht. Dieser Kunststoff füllt den Spalt zwischen der Muffe und dem benachbarten Rohr aus und stellt solcherart eine feste Verbindung zwischen der Muffe 5 bzw. dem Ring 6 und dem in die Muffe bzw. den Ring eingreifenden Rohrende her.

Um die Festigkeit der Verbindung zwischen dem Ring 6 bzw. der Muffe 5 und dem Rohr zu verbessern, werden bevorzugt zu beiden Seiten der Innennut 6' eine oder auch mehrere Ringnuten 8 vorgesehen, die gegenüber der Innennut 6' kleineren Querschnitt besitzt. Der Querschnitt wird dabei bevorzugt trapezförmig ausgeführt. Die Ringnuten 8 besitzen mit zunehmender Entfernung von der Innennut 6' kleineren Querschnitt. Auf diese Weise entsteht eine Labyrinthdichtung, die sich beim Eingießen des Kunststoffes durch den Eingußkanal günstig auswirkt.

Zwischen den Stirnflächen der aneinandergrenzenden Rohre kann ein Dichtelement, z.B. ein O-Ring angeordnet werden, der verhindert, daß beim Ausgießen flüssiger Kunststoff in das Innere der Rohre eindringt.

Die Zuschlag- bzw. Zusatzstoffe 2 können als Sperrschicht innen und/oder außenseitig im oder am Bauelement angeordnet sein. Die Anordnung der Sperrschicht erfolgt dabei jeweils an jener Seite, von der ausgehend ein Rattenverbiß zu erwarten ist.

**Patentansprüche**

I. Nagerbißgeschütztes Bauelement bzw. -teil, insbes. -rohr, ausgestattet mit mineralischen Stoffen mit einer Härte nach Mohs von mindestens 9, dadurch gekennzeichnet, daß zum Schutz von Bauelementen bzw. -teilen aus Kunststoff, insbesondere Kunststoffrohren, gegen Nagerbiß, die mineralischen Stoffe der Mohshärte von mindestens 9 als Zuschlagstoffe (2) in der Wandung, insbes. als Zwischenschicht in dem Kunststoffbauelement bzw. -teil, insbesonders -rohr (I) enthalten sind und/oder als äußere oder innere Oberflächenschicht auf dem Kunststoffbauelement bzw. -teil, insbesonders -rohr aufgebracht sind, wobei an ausgewählten Stellen des Wandungsquerschnittes eine erhöhte Konzentration an Hartstoffen vorgesehen sein kann.

2. Nagerbißgeschütztes Bauelement nach Anspruch I, dadurch gekennzeichnet, daß im Querschnitt des Bauelementes bzw. -teiles betrachtet, die Zuschlagstoffe (2) als voneinander beabstandete Schichten vorgesehen sind.

3. Nagerbißgeschütztes Rohr nach Anspruch

I, dadurch gekennzeichnet, daß im Querschnitt (Wandungsquerschnitt) des Bauelementes bzw. -teiles betrachtet, die Konzentration der Zuschlagstoffe, ausgehend von den Rändern, zur Querschnittsmitte hin ansteigt.

4. Nagerbißgeschütztes Rohr nach Anspruch I, dadurch gekennzeichnet, daß im Querschnitt (Wandungsquerschnitt) des Bauelementes bzw. -teiles betrachtet, die Konzentration der Zuschlagstoffe, ausgehend von einem Rand des Querschnittes zum anderen Querschnittsrand, insbes. gleichmäßig abfällt.

5. Nagerbißgeschütztes Rohr nach Anspruch I, dadurch gekennzeichnet, daß im Querschnitt (Wandungsquerschnitt) des Bauelementes bzw. -teiles betrachtet, die Konzentration der Zuschlagstoffe, ausgehend von der Querschnittsmitte gegen mindestens einen der Querschnittsränder, bevorzugt jedoch gegen beide Querschnittsränder ansteigt.

6. Nagerbißgeschütztes Bauelement nach Anspruch I, dadurch gekennzeichnet, daß die Wandung des Bauelementes bzw. -teiles, insbesondere Rohr (I), aus einem homogenen Gemisch aus Kunststoff und dem Zuschlagstoff (2) besteht.

7. Nagerbißgeschütztes Bauelement nach einem der Ansprüche I bis 5, dadurch gekennzeichnet, daß das Kunststoffbauelement bzw. -teil, insbesonders Rohr (I) als Schutzmantel für Kabel eingesetzt wird.

8. Verfahren zur Herstellung eines nagerbißgeschützten Bauelementes gemäß einem der Ansprüche I bis 7, dadurch gekennzeichnet, daß auf einem Wickelkern, der bevorzugt als ein aus Polyvinylchlorid bestehendes Rohr ausgebildet ist, Kunststoff, insbesondere Epoxiharz, aufgetragen, gegebenenfalls mit Fasern, vorzugsweise Glas- oder Kohlenstoffasern, verstärkt und mit dem Zusatzbzw. Zuschlagstoff mit einer Härte von mindestens 9 nach Mohs bedeckt wird, worauf weitere Schichten aus Kunststoff, in die vorzugsweise Verstärkungsfasern eingebettet werden, aufgetragen werden.

9. Extrudierverfahren zur Herstellung eines nagerbißgeschützten Bauelementes nach einem der Ansprüche I bis 7, dadurch gekennzeichnet, daß der Zuschlagstoff vor dem Austritt aus der Düse im äußeren und/oder am inneren Bereich dem Kunststoff oder an ausgewählten Stellen der Wandung zugeführt wird.

IO. Verbindungsring oder -muffe zur Verwendung mit einem Bauelement, z.B. Rohr, insbes. einem nagersicheren Bauelement, insbes. Rohr nach einem der Ansprüche I bis 6, dadurch gekennzeichnet, daß der Ring (6) oder die Muffe (5) in jenem Bereich, der zur Verbindung mit dem Bauelement vorgesehen ist, eine in sich geschlossene Innennut (6') aufweist, in welche mindestens ein nach außen führender Eingußkanal (7) für flüssigen Kunststoff mündet.

II. Verbindungsring oder -muffe nach Anspruch IO, dadurch gekennzeichnet, daß seitlich der Innennut (6'), bevorzugt zu beiden Seiten der Innennut (6'), Ringnuten (8) von gegenüber der Innennut (6') kleinerem, bevorzugt trapezförmigem Querschnitt, angeordnet sind.

I2. Verbindungsring oder -muffe nach Anspruch II, dadurch gekennzeichnet, daß jede von der Innennut (6') weiter entfernte Ringnut jeweils einen kleineren Querschnitt als die ihr benachbarte, jedoch der Innennut (6') näher gelegene Ringnut aufweist.

I3. Verfahren zum Festlegen einer Muffe oder eines Ringes nach Anspruch IO an einem Bauelement, insbes. an einem Rohr, dadurch gekennzeichnet, daß die Innennut mit flüssigem Kunststoff ausgegossen und eine Kunststoffbrücke zwischen dem Ring bzw. der Muffe und dem Bauelement gebildet wird, wobei bei aus Kunststoff bestehenden Bauelementen der Ausgußkunststoff den Kunststoff des Bauelementes anlöst.

0249590

FIG.1

# FIG.2

029590

# FIG.3

0249590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 559 949 (BASLER STUCKFARBEREI) * Figur; Seite 1; Seite 2, erster Abschnitt * | 1,3,4 | F 16 L 57/00 E 04 B 1/72 B 29 C 67/16 |
| A | | 2,4,5 6,8,9 | |
| | --- | | |
| X | DE-A-1 753 802 (UNITED AIRCRAFT CORP.) * Seite 1; Seite 6, Abschnitte 5-6; Seiten 7-9 * | 1,2,8 | |
| | --- | | |
| X | DE-U-8 515 454 (DOW CHEMICAL GmbH) * Seiten 1-6 * | 1,3,4 | |
| A | | 6,10, 11 | RECHERCHIERTE SACHGEBIETE (Int. Cl.4) F 16 L E 04 B B 29 C |
| | --- | | |
| A | DE-A-2 707 492 (BOSTIK GmbH) * Abschnitte 3,4 * | 10,11 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 29-09-1987 | NOESEN R.F. |